# EUROPEAN PATENT APPLICATION

(11) **EP 4 654 290 A1**
(43) Date of publication of application: **26.11.2025**
(21) Application number: 24744790.7
(22) Date of filing: 09.01.2024
(51) Int. Cl.: H01M 4/36, H01M 4/525, H01M 4/58, H01M 4/131, H01M 4/136, H01M 10/0525, H01M 4/02

(54) **POSITIVE ELECTRODE SLURRY FOR LITHIUM SECONDARY BATTERY AND METHOD FOR MANUFACTURING POSITIVE ELECTRODE FOR LITHIUM SECONDARY BATTERY USING SAME**

(30) Priority: 20.01.2023 KR 20230009079
(71) Applicant: LG Energy Solution, Ltd., Seoul 07335 (KR)
(72) Inventor: YOO, Su Yeon, Daejeon 34122 (KR); PARK, Sung Bin, Daejeon 34122 (KR); HEO, Min Ji, Daejeon 34122 (KR); CHO, Woo Hyung, Daejeon 34122 (KR)
(74) Representative: Goddar, Heinz J.
(86) International application number: PCT/KR2024/000426
(87) International publication number: WO 2024/155009

(57) **Abstract**

The present invention relates to a positive electrode slurry for a lithium secondary battery, which includes a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent, a positive electrode for a lithium secondary battery which includes a positive electrode active material layer that is formed by coating at least one surface of a positive electrode collector with the positive electrode slurry, a method of preparing the positive electrode, and a lithium secondary battery including the positive electrode.

## Description

### TECHNICAL FIELD

This application claims priority from Korean Patent Application No. 10-2023-0009079, filed on January 20, 2023, the disclosure of which is incorporated by reference herein.

The present invention relates to a positive electrode slurry for a lithium secondary battery which may contribute to improve performance in a high-temperature and high-voltage operating environment while using a positive electrode active material in the form of a single particle or a pseudo-single particle which is not subjected to a washing process and a boron coating process during a synthesis process, a method of preparing a positive electrode for a lithium secondary battery using the same, a positive electrode for a lithium secondary battery which is prepared by the preparation method, and a lithium secondary battery including the positive electrode.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

A conventional lithium nickel cobalt manganese oxide was generally in a form of a spherical secondary particle in which tens to hundreds of primary particles were aggregated. However, with respect to the lithium nickel cobalt manganese oxide in the form of a secondary particle in which many primary particles are aggregated as described above, there is a problem in that particle breakage, in which the primary particles fall off in a rolling process during preparation of the positive electrode, is likely to occur and cracks occur in the particles during charge and discharge. In a case in which the particle breakage or cracking of the positive electrode active material occurs, since a contact area with an electrolyte solution is increased, active material degradation and gas generation due to a side reaction with the electrolyte solution are increased, and, as a result, there is a problem in that life characteristics are degraded.

Also, demand for high-output and high-capacity batteries, such as batteries for electric vehicles, is recently increasing, and, accordingly, a nickel content in the positive electrode active material has tended to gradually increase. In a case in which the nickel content in the positive electrode active material increases, initial capacity characteristics improve, but structural collapse of the positive electrode active material occurs if charge and discharge are repeated and, as a result, there is a problem in that degradation rate of the positive electrode active material is increased to degrade life characteristics and reduce battery safety.

To solve the above-described problems, a technique of preparing a positive electrode active material in a form of a single particle rather than a secondary particle by increasing sintering temperature during the preparation of the lithium nickel cobalt manganese oxide has been proposed. With respect to the positive electrode active material in the form of a single particle, since a contact area with an electrolyte solution is smaller than a conventional positive electrode active material in the form of a secondary particle, there is less side reaction with the electrolyte solution, and there is less particle breakage during the preparation of an electrode due to excellent particle strength. Thus, in a case in which the positive electrode active material in the form of a single particle is used, there is an advantage in that gas generation and life characteristics are excellent.

However, with respect to the conventional positive electrode active material in the form of a single particle, since there is less interface between the primary particles which becomes a moving path for lithium ions in the particle, lithium mobility is low, and an excessive amount of a lithium by-product is present on its surface because it is prepared at a relatively high sintering temperature. In a case in which the excessive amount of the lithium by-product is present on the surface of the positive electrode active material, a gas generation amount is increased due to a side reaction between the lithium by-product and the electrolyte during high-temperature storage. The gas generation amount may be reduced by removing the lithium by-product through washing, but there is a problem in that resistance is increased due to the occurrence of damage to a surface structure of the positive electrode active material during the washing.

### DISCLOSURE OF THE INVENTION

### TECHNICAL PROBLEM

The present invention aims at providing a positive electrode slurry, which may contribute to improve cycle characteristics under high-temperature and high-voltage operating conditions, a positive electrode and a method of preparing a positive electrode which use the same, and a lithium secondary battery including the positive electrode.

### TECHNICAL SOLUTION

According to an embodiment, the present invention provides a positive electrode slurry for a lithium secondary battery which includes a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent.

According to another embodiment, the present invention provides a positive electrode for a lithium secondary battery which includes a positive electrode active material layer that is formed by coating at least one surface of a positive electrode collector with the positive electrode slurry.

According to another embodiment, the present invention provides a positive electrode for a lithium secondary battery which includes a positive electrode active material including a lithium nickel-based oxide, which has a composition, in which an amount of nickel among total metals excluding lithium is 50 mol% or more, and is in a form of at least one of a single particle or a pseudo-single particle that is a secondary particle in which 30 or less primary particles are aggregated, and a lithium borate-based compound.

According to another embodiment, the present invention provides a method of preparing a positive electrode for a lithium secondary battery which includes steps of preparing a positive electrode slurry by mixing a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent, and forming a positive electrode active material layer by coating at least one surface of a positive electrode collector with the positive electrode slurry.

According to another embodiment, the present invention provides a lithium secondary battery including the positive electrode; a negative electrode including a negative electrode active material; a separator disposed between the positive electrode and the negative electrode; and an electrolyte.

### ADVANTAGEOUS EFFECTS

In a case in which a positive electrode is prepared by using a positive electrode slurry according to the present invention, a surface of a particle may be stabilized and a capacity development ratio may be increased without performing boron coating and washing processes during a lithium nickel-based oxide synthesis process, and ultimately, an effect of improving performance at high temperature and high voltage of a lithium secondary battery may be achieved.

According to a conventional general process of preparing a positive electrode active material, residual lithium present on surfaces of lithium transition metal oxide particles is removed through a washing process after sintering, wherein, in this case, damage or collapse of a layered structure may occur while the surface of the particle reacts with water, and this may lead to a decrease in capacity and rate capability of the battery and an increase in resistance at high temperatures.

A method of forming a boron coating layer on the surface of the particle has been mainly used to prevent the damage caused by this washing process, and, in this case, a high-temperature sintering process is necessary, wherein, since boron grows in a plate shape, hardness of the particle is increased so that difficulty during subsequent rolling may be increased, and the boron coating layer may cause another problem of increasing surface resistance of the particle due to its amorphous nature. Particularly, with respect to a positive electrode active material in the form of a single particle, since lithium mobility is relatively lower than that of a positive electrode active material in the form of a secondary particle, initial resistance is not only high, but also the surface resistance may further increase because it is easily changed into a rock-salt phase, as an electrochemically inactive phase, if sintering temperature is increased to form the single particle.

Thus, in the present invention, a lithium borate-based compound was introduced into the positive electrode slurry, and it was confirmed that an effect of boron coating may be achieved without introducing the boron coating process and the washing process in the process of preparing a positive electrode active material. That is, effects, such as stabilization of the surface of the particle, suppression of a side reaction, and an improvement of capacity, may be achieved without experiencing the problems of increased surface resistance due to the boron coating and surface damage due to the washing process.

Also, pores are allowed to be formed in the positive electrode while the lithium borate-based compound dispersed in the positive electrode is extracted by being dissolved in an electrolyte solution during injection of the electrolyte solution and a battery activation process, and, since the pores thus secured are impregnated with the electrolyte solution, an amount of the electrolyte solution remained may not only be increased, but also additional lithium ions are secured due to the lithium borate-based compound dissolved in the electrolyte solution to replace a LiPF₆ salt, and accordingly, it may also contribute to improve lifetime of the battery by suppressing decomposition of the electrolyte solution.

### BRIEF DESCRIPTION OF THE DRAWINGS

FIG. 1 is a graph illustrating room-temperature lifetime evaluation results of batteries in which positive electrodes of Example and Comparative Example are used.
FIG. 2 is a graph illustrating high-temperature lifetime evaluation results of the batteries in which the positive electrodes of Example and Comparative Example are used.

### MODE FOR CARRYING OUT THE INVENTION

Hereinafter, each configuration of the present invention will be described in more detail.

In the present invention, the expression "primary particle" means a particle unit in which a grain boundary does not exist in appearance when observed by using a scanning electron microscope with a field of view of 5,000 times to 20,000 times, and the expression "secondary particle" means a particle formed by aggregation of a plurality of primary particles.

The expression "average particle diameter of the primary particle" in the present invention means an arithmetic average value of particle diameters which is calculated after measuring the particle diameters of at least 20 primary particles observed in a scanning electron microscope image. In this case, the particle diameter means a diameter of the longest axis of the primary particle.

The expression "secondary particle" in the present invention is a particle formed by aggregation of the plurality of primary particles. In the present invention, a secondary particle, in which 30 or less primary particles are aggregated, is referred to as a pseudo-single particle in order to distinguish it from a conventional secondary particle which is formed by aggregation of tens to hundreds of primary particles.

The expression "D50" in the present invention means a particle diameter corresponding to a cumulative volume of 50% in a volume cumulative particle size distribution of corresponding powder, wherein it may be measured using a laser diffraction method. For example, after dispersing positive electrode active material powder in a dispersion medium, the dispersion medium is introduced into a commercial laser diffraction particle size measurement instrument (e.g., S-3500 by Microtrac) and then irradiated with ultrasonic waves of about 28 kHz at an output of 60 W to obtain a volume cumulative particle size distribution graph, and the D50 may be measured by a method in which a particle diameter at a cumulative volume of 50% in the obtained volume cumulative particle size distribution graph is obtained.

### Positive Electrode Slurry

A positive electrode slurry according to the present invention includes a positive electrode active material; a lithium borate-based compound; a binder; a conductive agent; and a solvent, wherein the positive electrode active material is a lithium nickel-based oxide which has a composition, in which an amount of nickel among total metals excluding lithium is 50 mol% or more, and is in a form of at least one of a single particle or a pseudo-single particle, wherein the pseudo-single particle is a secondary particle in which 30 or less primary particles are aggregated.

In an embodiment of the present invention, the lithium borate-based compound may be lithium tetraborate (Li₂B₄O₇). Since the lithium tetraborate has lower reactivity with moisture than other lithium salt compounds such as LiPF₆, LiBF₄, LiN (SO₂CF₂CF₃)₂, LiNO₃, and LiB(C₂O₄)₂, it is advantageous in terms of preventing an electrolyte decomposition reaction, corrosion of a current collector, and dissolution of transition metals of a positive electrode due to a side reaction with the moisture.

The lithium borate-based compound may be included in an amount of 0.005 part by weight to 0.5 part by weight, preferably 0.005 part by weight to 0.1 part by weight, and more preferably 0.007 part by weight to 0.05 part by weight based on 100 parts by weight of the lithium nickel-based oxide. When the lithium borate-based compound is included in an amount of 0.005 part by weight or more based on 100 parts by weight of the lithium nickel-based compound, an effect due to the addition of the lithium borate-based compound may be sufficiently achieved, but the inclusion of 0.5 part by weight or less of the lithium nickel-based compound is desirable in terms of preventing rolling from becoming difficult due to an increase in hardness caused by boron.

The lithium nickel-based oxide may have an amount of nickel among total metals excluding lithium of 55 mol% or more, preferably, 60 mol% or more.

Specifically, the lithium nickel-based oxide may have a composition of Formula 1 below.

[Formula 1] Li₁₊ₓ(NiₐCo_{b}M¹_{c}M²_{d})O₂

In Formula 1,
M¹ is manganese (Mn), aluminum (Al), or a combination thereof,
M² is at least one selected from the group consisting of tungsten (W), copper (Cu), iron (Fe), vanadium (V), chromium (Cr), titanium (Ti), zirconium (Zr), zinc (Zn), aluminum (Al), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and
1+x, a, b, c, and d are atomic fractions of independent elements, respectively,
wherein -0.2≤x≤0.2, 0.50≤a<1, 0<b<0.50, 0<c<0.50, 0≤d≤0.10, and a+b+c+d=1.

1+x represents a molar ratio of lithium in the lithium nickel-based oxide, wherein x may satisfy -0.1≤x≤0.2 or 0≤x≤0.2. When the molar ratio of the lithium satisfies the above range, a crystal structure of the lithium nickel-based oxide may be stably formed.

a represents a molar ratio of nickel among total metals excluding lithium in the lithium nickel-based oxide, wherein a may satisfy 0.50<a<1, 0.55≤a<1, or 0.60≤a<1. When the molar ratio of the nickel satisfies the above range, high energy density may be exhibited to achieve high capacity and to be stably operated at a high voltage at the same time.

b represents a molar ratio of cobalt among the total metals excluding lithium in the lithium nickel-based oxide, wherein b may satisfy 0<b≤0.40, 0<b≤0.25, or 0<b≤0.15. When the molar ratio of the cobalt satisfies the above range, good resistance characteristics and output characteristics may be achieved.

c represents a molar ratio of M¹ among the total metals excluding lithium in the lithium nickel-based oxide, wherein c may satisfy 0<c≤0.40, 0<c≤0.35, or 0<c≤0.30. For example, in a case in which M¹ is Mn, when the molar ratio of the Mn satisfies the above range, structural stability of the positive electrode active material is excellent.

d represents a molar ratio of an element M² among the total metals excluding lithium in the lithium nickel-based oxide, wherein d may satisfy 0≤d≤0.08, 0≤d≤0.05, or 0≤d≤0.03.

Preferably, M¹ of Formula 1 may be Mn. That is, the lithium nickel-based oxide may be lithium nickel cobalt manganese-based oxide.

The lithium nickel-based oxide may include a coating layer containing at least one element of Al and W on a surface of the particle, and may preferably include a coating layer containing Al and W on the surface of the particle. In this case, since Al and W may react with a lithium by-product remaining on the surface to form LiAlO₂, LiWO₃, or the like, an amount of the lithium by-product remained may be reduced, and thus, the coating layer has an effect of reducing a gas generation amount. The coating element may exist in the form of an oxide in the coating layer and may be formed by a method such as dry coating, wet coating, chemical vapor deposition (CVD), physical vapor deposition (PVD), and atomic layer deposition (ALD). Among them, it is preferable to form the coating layer through the atomic layer deposition method because the coating layer may be formed with a large area.

A formation area of the coating layer may be in a range of 10% to 100%, preferably 30% to 100%, and more preferably 50% to 100% based on a total surface area of the lithium nickel-based oxide particles. When the formation area of the coating layer satisfies the above range, an effect of reducing the gas generation amount and improving life characteristics is excellent.

In a case in which the coating layer contains Al, an amount of the Al in the coating layer may be in a range of 5 wt% or less, preferably 0.1 wt% to 5 wt%, and more preferably 0.5 wt% to 1 wt% based on a total weight of the lithium nickel-based oxide. In a case in which the coating layer contains W, an amount of the W in the coating layer may be in a range of 5 wt% or less, preferably 0.1 wt% to 5 wt%, and more preferably 0.5 wt% to 1 wt% based on the total weight of the lithium nickel-based oxide.

The lithium nickel-based oxide may contain more Li₂CO₃ than LiOH when weights of lithium compounds remaining on the surfaces of the particles are measured. When considering that Li₂CO₃ is more easily removed than LiOH by surface washing, since the fact that there is more Li₂CO₃ than LiOH means that no washing process has been introduced, there is an effect of reducing initial resistance.

Specifically, an amount of the Li₂CO₃ may be in a range of 0.1 wt% to 0.5 wt% based on the total weight of the lithium nickel-based oxide, and an amount of the LiOH may be in a range of 0.01 wt% to 0.05 wt% based on the total weight of the lithium nickel-based oxide. The amounts of the LiOH and Li₂CO₃ may be confirmed by pH titration of the lithium nickel-based oxide.

The lithium nickel-based oxide may have a D₅₀ of 2 µm to 8 µm, preferably 2 µm to 5 µm, and more preferably 3 µm to 4 µm.

The positive electrode active material may be included in an amount of 80 wt% to 99 wt%, specifically, 90 wt% to 99 wt% based on a total weight of a solid content in the positive electrode slurry. In this case, since energy density is decreased when the amount of the positive electrode active material is 80 wt% or less, capacity may be reduced.

The binder may be at least one selected from the group consisting of polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and may preferably be polyvinylidene fluoride (PVDF).

The binder may be included in an amount of 0.5 wt% to 2.5 wt%, preferably 0.5 wt% to 2 wt%, and more preferably 1 wt% to 2 wt% based on the total weight of the solid content in the positive electrode slurry. Since adhesion to a current collector and bonding between the particles are sufficiently secured when the amount of the binder is within the above range, initial resistance may be maintained low while improving durability of the positive electrode.

The conductive agent may be at least one selected from the group consisting of graphite such as natural graphite or artificial graphite; carbon black such as acetylene black, Ketjen black, channel black, furnace black, lamp black, and thermal black; carbon-based materials such as carbon fibers and carbon nanotubes; powder or fibers of metal such as copper, nickel, aluminum, and silver; conductive whiskers such as zinc oxide whiskers and potassium titanate whiskers; conductive metal oxides such as titanium oxide; and conductive polymers such as polyphenylene derivatives, and may preferably be carbon black.

The conductive agent may be included in an amount of 0.5 wt% to 2.5 wt%, preferably 0.5 wt% to 2 wt%, and more preferably 1 wt% to 2 wt% based on the total weight of the solid content in the positive electrode slurry. When the amount of the conductive agent is within the above range, it is desirable in that it may reduce a dead volume while maintaining conductivity between the active materials.

The solvent of the positive electrode slurry may be an organic solvent such as NMP (N-methyl-2-pyrrolidone), and may be used in an amount such that the positive electrode slurry has desirable viscosity. For example, the solid content in the positive electrode slurry may be included in an amount of 40 wt% to 90 wt%, preferably 50 wt% to 85 wt%, and more preferably 60 wt% to 70 wt% based on a total weight of the positive electrode slurry.

### Positive Electrode and Method of Preparing the Same

A positive electrode according to the present invention includes a positive electrode active material layer which is formed by coating at least one surface of a positive electrode collector with the positive electrode slurry.

The positive electrode collector is not particularly limited as long as it has conductivity without causing chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the positive electrode collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may have a porosity of 19% to 25%, preferably 20% to 24%, and more preferably 21% to 23%. While the lithium borate-based compound flows into an electrolyte solution as described above, such porosity may appear. Herein, the porosity means a value calculated by [Equation 1] below. Porosity (%) of the positive electrode active material layer = ((true density of positive electrode active material - positive electrode density)/the true density of the positive electrode active material) × 100

In Equation 1, the positive electrode density is a value calculated by Equation 2 below. Positive electrode density = (weight of the positive electrode - weight of the positive electrode collector)/(a×b)

In Equation 2, a is an area of the positive electrode, and b is a value obtained by subtracting a thickness of the positive electrode collector from a thickness of the positive electrode.

A method of preparing a positive electrode according to the present invention includes steps of:
preparing a positive electrode slurry by mixing a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent, and
forming a positive electrode active material layer by coating at least one surface of a positive electrode collector with the positive electrode slurry.

The method of preparing a positive electrode according to the embodiment of the present invention further includes a step of preparing the lithium nickel-based oxide by sintering a mixture of a nickel transition metal precursor having a nickel content of 50 mol% or more and a lithium raw material, wherein the step of preparing the lithium nickel-based oxide may not include a step of washing after the sintering. As described above, since surface properties of the lithium nickel-based oxide are deteriorated during the washing process to increase the resistance, it is desirable not to include the washing step by introducing the positive electrode slurry according to the present invention.

In this case, the nickel transition metal precursor may be used by purchasing a commercially available precursor, or may be prepared according to a method of preparing a precursor which is known in the art.

Preferably, the nickel transition metal precursor may be a nickel transition metal hydroxide having an amount of nickel among total transition metals of 50 mol% or more, and may more preferably be a nickel transition metal hydroxide having an amount of nickel of 55 mol% or more or 60 mol% or more. When the amount of the nickel in the nickel transition metal precursor satisfies the above range, high capacity characteristics may be achieved.

For example, the precursor may be prepared by a coprecipitation reaction while adding a transition metal aqueous solution, an ammonium cationic complexing agent, and a basic compound to a reactor and stirring.

The transition metal aqueous solution may be prepared by dissolving transition metal-containing raw materials in a solvent, such as water, and, for example, may be prepared by dissolving a nickel-containing raw material, a cobalt-containing raw material, and a M¹-containing raw material in water.

The transition metal-containing raw materials may be acetic acid salts, carbonates, nitrates, sulfates, halides, sulfides, or oxides of transition metal.

Specifically, the nickel-containing raw material, for example, may be NiO, NiCO₃·2Ni(OH)₂·4H₂O, NiC₂O₂·2H₂O, Ni(NO₃)₂·6H₂O, NiSO₄, NiSO₄·6H₂O, nickel halide, or a combination thereof.

The cobalt-containing raw material, for example, may be CoSO₄, Co(OCOCH₃)₂·4H₂O, Co(NO₃)₂·6H₂O, CoSO₄·7H₂O, or a combination thereof.

As an example when M¹ is manganese, the M¹-containing raw material may be Mn₂O₃, MnO₂, Mn₃O₄, MnCO₃, Mn(NO₃)₂, MnSO₄·H₂O, manganese acetate, manganese halide, or a combination thereof.

In this case, an amount of each of the transition metal-containing raw materials added may be determined in consideration of a molar ratio of the transition metal in the positive electrode active material to be finally prepared.

The ammonium cationic complexing agent may include at least one compound selected from the group consisting of NH₄OH, (NH₄)₂SO₄, NH₄NO₃, NH₄Cl, CH₃COONH₄, and (NH₄)₂CO₃, and may be added into the reactor in the form of a solution in which the above compound is dissolved in a solvent. In this case, water or a mixture of water and an organic solvent (specifically, alcohol, etc.), which may be uniformly mixed with the water, may be used as the solvent.

The basic compound may be at least one compound selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol, etc.), which may be uniformly mixed with the water, may be used as the solvent.

If the transition metal aqueous solution, the ammonium cationic complexing agent, and the basic compound are added to the reactor and stirred as described above, precursor particles in the form of a transition metal hydroxide are formed while the transition metals in the transition metal aqueous solution are co-precipitated.

In this case, the transition metal aqueous solution, the ammonium cationic complexing agent, and the basic compound are added in amounts such that a pH of a reaction solution is within a desired range.

If the precursor particles are formed by the above-described method, a precursor is obtained by separating the particles from the reaction solution. For example, after separating the precursor from the reaction solution by filtering the reaction solution, the separated precursor may be washed and dried to obtain a precursor. In this case, a process, such as grinding and/or classification, may be performed, if necessary.

The nickel transition metal precursor thus prepared and a lithium raw material are mixed and then sintered to prepare a lithium nickel-based oxide. In this case, a M² metal-containing raw material may be mixed together and sintered, if necessary.

As the lithium raw material, lithium-containing sulfates, nitrates, acetic acid salts, carbonates, oxalates, citrates, halides, hydroxides, or oxyhydroxides may be used, and, for example, Li₂CO₃, LiNO₃, LiNO₂, LiOH, LiOH·H₂O, LiH, LiF, LiCl, LiBr, LiI, CH₃COOLi, Li₂O, Li₂SO₄, Li₃C₆H₅O₇, or a mixture thereof may be used.

The lithium raw material and the nickel transition metal precursor may be mixed so that a molar ratio of lithium (Li) :total metals in the precursor is in a range of 1:1 to 1.2:1, preferably, 1:1 to 1.1:1. When the mixing ratio of the lithium raw material to the metal in the precursor satisfies the above range, since a layered crystal structure of the lithium nickel-based oxide is well developed, a positive electrode active material having excellent capacity characteristics and structural stability may be prepared.

The sintering is performed at a temperature at which a single particle or pseudo-single particle may be formed. In order to form the single particle or pseudo-single particle, the sintering must be performed at a temperature higher than that during preparation of conventional lithium composite transition metal oxide in the form of a secondary particle, and, for example, in a case in which precursor compositions are the same, the sintering must be performed at a temperature about 30°C to 100°C higher than that during the preparation of the conventional lithium composite transition metal oxide in the form of a secondary particle.

In an embodiment of the present invention, the sintering in the step of preparing the lithium nickel-based oxide may be performed at 700°C to 1,050°C, preferably at 750°C to 1,000°C, and more preferably at 800°C to 900°C.

When the sintering temperature satisfies the above range, a positive electrode active material in the form of a single particle or pseudo-single particle having excellent electrochemical properties may be prepared. Specifically, it is desirable that the sintering temperature is 700°C or higher to prevent formation of a positive electrode active material in the form of a secondary particle, but, since excessive sintering occurs such that the layered crystal structure is not properly formed to deteriorate the electrochemical properties, it is desirable that the sintering temperature is 1,050°C or less.

Also, the sintering may be performed for 5 hours to 35 hours in an oxygen atmosphere. In the present specification, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

Also, the method of preparing a positive electrode according to the embodiment of the present invention may not include a step of coating boron on the lithium nickel-based oxide between the step of preparing the lithium nickel-based oxide and the step of preparing the positive electrode slurry. As described above, since a boron coating layer increases surface resistance, it is desirable not to include a separate boron coating layer forming process by introducing the positive electrode slurry according to the present invention.

In the step of forming the positive electrode active material layer, a loading amount of the positive electrode slurry may be in a range of 14 mg/cm² to 24 mg/cm², preferably 16 mg/cm² to 22 mg/cm², and more preferably 18 mg/cm² to 20 mg/cm².

The method of preparing a positive electrode for a lithium secondary battery according to the embodiment of the present invention may further include a step of rolling a stack of the positive electrode collector and the positive electrode active material layer. After cutting the stack, the rolling may be performed through a process of putting the cut stack between two rolling rolls and pressing it by adjusting a spacing of the rolling rolls.

Each component of the method of preparing a positive electrode for a lithium secondary battery according to the embodiment of the present invention may refer to the description of each component of the above-described positive electrode slurry.

### Lithium Secondary Battery

Next, a lithium secondary battery according to the present invention will be described.

The lithium secondary battery of the present invention includes the above-described positive electrode for a lithium secondary battery; a negative electrode including a negative electrode active material; a separator disposed between the positive electrode and the negative electrode; and an electrolyte.

In an embodiment of the present invention, the lithium secondary battery may have an operating voltage of 4.3 V or more, particularly 4.3 V to 4.5 V, and more particularly 4.35 V to 4.45 V. Since a contact with the electrolyte solution is reduced to suppress a side reaction, such as metal dissolution, as the positive electrode according to the present invention includes a boron (B) coating, excellent characteristics are exhibited at high voltage, and thus, the lithium secondary battery including the same may be operated at high voltage.

The lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent of the negative electrode active material layer is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon-based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on a total weight of the negative electrode active material layer.

The binder of the negative electrode active material layer improves adhesion between the negative electrode active material particles and adhesion between the negative electrode active material and the negative electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

The negative electrode active material layer, for example, may be prepared by coating a negative electrode slurry including the negative electrode active material and optionally the binder and the conductive agent on the negative electrode collector and drying the coated negative electrode collector, or may be prepared by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte included in the lithium secondary battery according to the present invention may be an organic liquid electrolyte, an inorganic liquid electrolyte, a solid polymer electrolyte, a gel-type polymer electrolyte, a solid inorganic electrolyte, or a molten-type inorganic electrolyte, but the present invention is not limited thereto.

In an embodiment of the present invention, the electrolyte is an organic liquid electrolyte, wherein it may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 5.0 M, preferably, 0.1 M to 3.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, an additive may be further included in the electrolyte. For example, as the additive, a carbonate-based compound, a sultone-based compound, a sulfate-based compound, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be used alone or in a mixture thereof, but the present invention is not limited thereto. The additive may be included in an amount of 0.1 wt% to 10 wt%, preferably, 0.1 wt% to 5 wt% based on a total weight of the electrolyte.

As described above, since the lithium secondary battery including the positive electrode according to the present invention has excellent initial resistance and high-temperature storage characteristics, the lithium secondary battery is suitable for portable devices, such as mobile phones, notebook computers, and digital cameras, and electric vehicles.

Thus, according to another embodiment of the present invention, a battery module including the lithium secondary battery as a unit cell and a battery pack including the battery module are provided.

The battery module or the battery pack may be used as a power source of at least one medium and large sized device of a power tool; an electric vehicle (EV); or a power storage system.

Hereinafter, examples of the present invention will be described in detail in such a manner that it may easily be carried out by a person with ordinary skill in the art to which the present invention pertains.

### [Example and Comparative Example: Preparation of Positive Electrodes]

### Example 1.

After a Ni_{0.60}Co_{0.10}Mn_{0.30}(OH)₂ transition metal precursor and LiOH·H₂O were mixed such that a molar ratio of transition metals (Ni+Co+Mn) :Li was 1:1.05, temperature was increased to 850°C at a heating rate of 5°C/min, then maintained for 10 hours, and cooled to room temperature at a cooling rate of 5°C/min to prepare a lithium nickel cobalt manganese-based oxide having a composition of Li[Ni_{0.60}Co_{0.10}Mn_{0.30}]O₂ and a D₅₀ = 3.5 µm. Thereafter, a coating layer containing Al and W was formed on a surface thereof. As a result of observing the prepared lithium nickel cobalt manganese-based oxide with a scanning electron microscope, it may be confirmed that it had a form of a single particle.

The lithium nickel cobalt manganese-based oxide, a carbon black conductive agent, and a PVDF binder were mixed in N-methylpyrrolidone in a weight ratio of 97.3:1.43:1.27 and 0.01 part by weight of Li₂B₄O₇ was added based on 100 parts by weight of the lithium nickel cobalt manganese-based oxide to prepare a positive electrode slurry having a solid content of 74 wt%.

The prepared positive electrode slurry was applied to one surface of a 10 µm thick aluminum current collector at a loading amount of 20 mg/cm² and then dried at 130°C to prepare a positive electrode active material layer.

After a stack having the positive electrode active material layer formed on the current collector was cut, the cut stack was put between two rolling rolls and rolled at 25°C. A porosity of the positive electrode active material layer, which was obtained by Equation 1, after the rolling was 22%.

### Comparative Example 1.

A positive electrode was prepared in the same manner as in Example 1 except that Li₂B₄O₇ was not added during the preparation of the positive electrode slurry, and the lithium nickel cobalt manganese-based oxide, the carbon black conductive agent, and the PVDF binder were mixed in N-methylpyrrolidone in a weight ratio of 97.3:1.43:1.27 to prepare a positive electrode slurry.

### [Experimental Example 1: Room-temperature and High-temperature Lifetime Evaluation]

### (1) Preparation of Batteries

After an electrode assembly was prepared by disposing a 15 µm thick polyethylene-based separator between a lithium metal negative electrode and each of the positive electrodes prepared in the example and the comparative example, the electrode assembly was disposed in a battery case, an electrolyte solution was injected into the case, the case was sealed, and an activation step was then performed to prepare a half cell.

After an organic solution was prepared by dissolving 1 M LiPF₆ in a mixed organic solvent in which ethylene carbonate and ethyl methyl carbonate were mixed in a volume ratio of 3:7, a mixture of the organic solution with 0.2 wt% of vinylene carbonate (VC) was used as the electrolyte solution.

### (2) Room-temperature Lifetime Evaluation

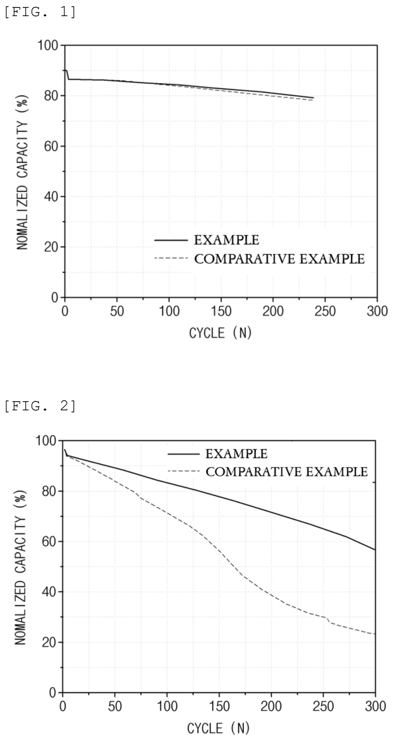

Each of the above-prepared batteries was charged at a rate of 0.7 C to 4.4 V under constant current/constant voltage conditions at 25°C, then subjected to 0.05 C current cut-off, and discharged at a constant current of 0.5 C to 3.0 V. Capacity retention was measured when the above charging and discharging were performed 200 times or more and the results thereof are illustrated in FIG. 1.

### (3) High-temperature Lifetime Evaluation

Each of the above-prepared batteries was charged at a rate of 0.7 C to 4.4 V under constant current/constant voltage conditions at 45°C, then subjected to 0.05 C current cut-off, and discharged at a constant current of 0.5 C to 3.0 V. Capacity retention was measured when the above charging and discharging were performed 300 times and the results thereof are illustrated in FIG. 2.

According to FIG. 1 and FIG. 2, when comparing the positive electrode of Example 1, in which Li₂B₄O₇ was added during the preparation of the positive electrode slurry, with the positive electrode of Comparative Example 1 in which Li₂B₄O₇ was not added, it may be confirmed that the positive electrode of Example 1 had a significantly better lifetime improvement effect at high temperature. Thus, as described above, in a case in which Li₂B₄O₇ was added during the preparation of the positive electrode slurry, it may be understood that there eventually was an effect of improving battery lifetime by stabilizing the surface of the particle and suppressing the side reaction.

## Claims

1. A positive electrode slurry for a lithium secondary battery, comprising a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent.

2. The positive electrode slurry for a lithium secondary battery of claim 1, wherein the lithium borate-based compound is lithium tetraborate (Li₂B₄O₇).

3. The positive electrode slurry for a lithium secondary battery of claim 1, wherein the lithium borate-based compound is included in an amount of 0.005 part by weight to 0.5 part by weight based on 100 parts by weight of the lithium nickel-based oxide.

4. The positive electrode slurry for a lithium secondary battery of claim 1, wherein the binder is included in an amount of 0.5 wt% to 2.5 wt% based on a total weight of a solid content in the positive electrode slurry.

5. The positive electrode slurry for a lithium secondary battery of claim 1, wherein the conductive agent is included in an amount of 0.5 wt% to 2.5 wt% based on a total weight of a solid content in the positive electrode slurry.

6. The positive electrode slurry for a lithium secondary battery of claim 1, wherein a solid content in the positive electrode slurry is included in an amount of 40 wt% to 90 wt% based on a total weight of the positive electrode slurry.

7. The positive electrode slurry for a lithium secondary battery of claim 1, wherein the lithium nickel-based oxide has a composition of Formula 1:
[Formula 1] Li₁₊ₓ(NiₐCo_{b}M¹_{c}M²_{d})O₂
wherein, in Formula 1,
M¹ is Mn, Al, or a combination thereof,
M² is at least one selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
1+x, a, b, c, and d are atomic fractions of independent elements, respectively,
wherein -0.2≤x≤0.2, 0.50≤a<1, 0<b<0.50, 0<c<0.50, 0≤d≤0.10, and a+b+c+d=1.

8. The positive electrode slurry for a lithium secondary battery of claim 1, wherein the lithium nickel-based oxide comprises a coating layer containing at least one element of Al and W on a surface of the particle.

9. The positive electrode slurry for a lithium secondary battery of claim 1, wherein the lithium nickel-based oxide has a D₅₀ of 2 µm to 8 µm.

10. The positive electrode slurry for a lithium secondary battery of claim 1, wherein the lithium nickel-based oxide contains more Li₂CO₃ than LiOH when weights of lithium compounds remaining on surfaces of the particles are measured.

11. A positive electrode for a lithium secondary battery, comprising a positive electrode active material layer which is formed by coating at least one surface of a positive electrode collector with the positive electrode slurry of claim 1.

12. The positive electrode for a lithium secondary battery of claim 11, wherein the positive electrode active material layer has a porosity of 19% to 25%.

13. A positive electrode for a lithium secondary battery, comprising:
a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated, and
a lithium borate-based compound.

14. A method of preparing a positive electrode for a lithium secondary battery, comprising steps of:
preparing a positive electrode slurry by mixing a positive electrode active material including a lithium nickel-based oxide which has a composition, in which an amount of nickel among total metals excluding lithium is 50 mol% or more, and is in a form of at least one of a single particle or a pseudo-single particle that is a secondary particle in which 30 or less primary particles are aggregated; a lithium borate-based compound; a binder; a conductive agent; and a solvent, and
forming a positive electrode active material layer by coating at least one surface of a positive electrode collector with the positive electrode slurry.

15. The method of claim 14, further comprising a step of preparing the lithium nickel-based oxide by sintering a mixture of a nickel transition metal precursor having a nickel content of 50 mol% or more and a lithium raw material,
wherein the step of preparing the lithium nickel-based oxide does not comprise a step of washing after the sintering.

16. The method of claim 15, wherein the method does not comprise a step of coating boron on the lithium nickel-based oxide between the step of preparing the lithium nickel-based oxide and the step of preparing the positive electrode slurry.

17. A lithium secondary battery comprising:
the positive electrode of claim 11 or 13;
a negative electrode including a negative electrode active material;
a separator disposed between the positive electrode and the negative electrode; and
an electrolyte.

18. The lithium secondary battery of claim 17, wherein an operating voltage is 4.3 V or more.
